Europäisches Patentamt

European Patent Office

Office européen des brevets

(19)

(11) Veröffentlichungsnummer: **0 099 995 B1**

(12) **EUROPÄISCHE PATENTSCHRIFT**

(45) Veröffentlichungstag der Patentschrift: **02.10.91**

(51) Int. Cl.⁵: **B23D 77/02**

(21) Anmeldenummer: **83106374.8**

(22) Anmeldetag: **30.06.83**

(54) **Einmesser-Reibahle.**

(30) Priorität: **17.07.82 DE 3226799**

(43) Veröffentlichungstag der Anmeldung:
**08.02.84 Patentblatt 84/06**

(45) Bekanntmachung des Hinweises auf die
Patenterteilung:
**02.10.91 Patentblatt 91/40**

(84) Benannte Vertragsstaaten:
**AT BE CH DE FR GB IT LI NL SE**

(56) Entgegenhaltungen:
**DE-B- 1 238 743          FR-A- 1 317 605**
**FR-A- 1 572 712          GB-A- 106 917**
**GB-A- 205 573            US-A- 2 278 988**
**US-A- 2 380 517          US-A- 3 033 062**

**KRESS : REIBEN MIT HOHEN GESCHWINDIG-
HEITEN**

**PROSPEKT MAPAL "IMPULSE"**

(73) Patentinhaber: **MAPAL Fabrik für Präzisionswerkzeuge Dr. Kress KG
Obere Bahnstrasse 13 Postfach 1520
W-7080 Aalen(DE)**

(72) Erfinder: **Der Erfinder hat auf seine Nennung
verzichtet**

(74) Vertreter: **Gleiss, Alf-Olav, Dipl.-Ing.
Patentanwalt Silberburg Strasse 187
W-7000 Stuttgart 1(DE)**

## Beschreibung

Die Erfindung betrifft eine Einmesser-Reibahle mit den im Oberbegriff des Anspruchs 1 angegebenen Merkmalen.

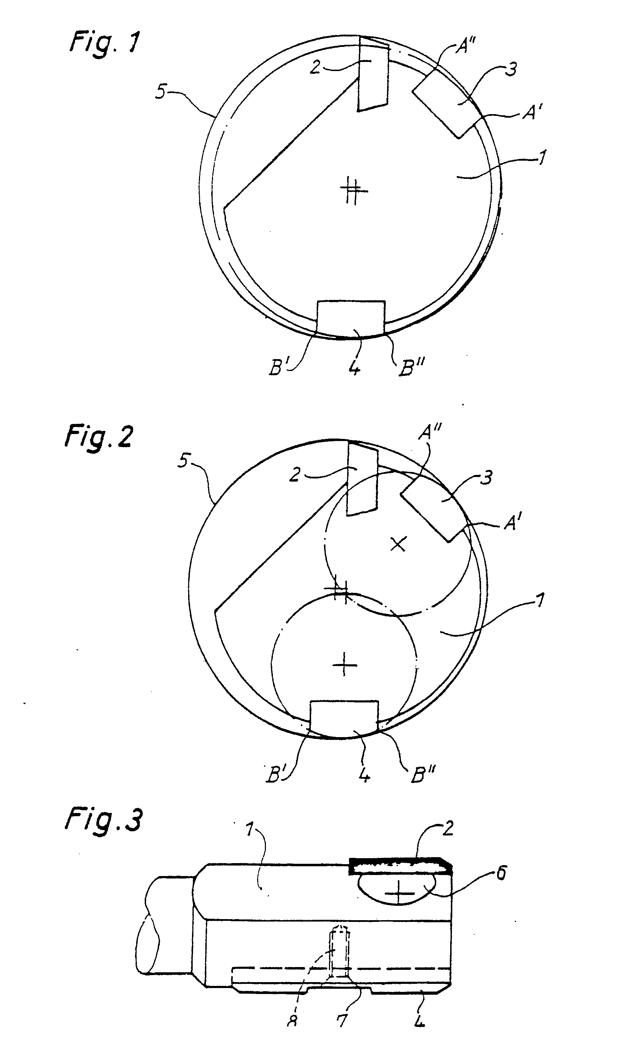

Da bei Werkzeugen dieser Art die Schneide geringfügig über den Flugkreis der Führungsleisten übersteht, von denen üblicherweise die eine der Schneide diametral gegenüberliegend und die andere in dem hinter der Schneide liegenden Quadranten angeordnet ist, ist die Lage der beiden, bei bekannten Reibahlen denselben Krümmungsradius wie die Bohrungswandung aufweisenden Führungsleisten beim Reibvorgang gegenüber der Bohrungswandung eine unterschiedliche. Die in Drehrichtung vordere Führungsleiste liegt mit ihrer rückwärtigen Längskante und dem an dies angrenzenden Bereich gegen die Bohrungswandung an, während die in Drehrichtung hintere Führungsleiste mit ihrer vorderen Längskante und dem an diese angrenzenden Bereich gegen die Bohrungswandung anliegt, wie dies in Fig. 1 dargestellt ist!

Der an diesen Kanten auftretende hohe Druck führt dabei zu einem erheblichem Verschleiß auch in dem an diese Kanten angrenzenden Bereich. Insbesondere bei der in Drehrichtung hinteren Führungsleiste wird der Schmierfilm schon bei verhältnismäßig kleinen Schnittdrücken abgeschert, so daß auch hierdurch ein erhöhter Verschleiß auftritt.

Infolge dieses hohen Kantendrucks war es bei den so ausgebildeten Führungsleisten nicht möglich, diesen Verschleiß durch Beschichtung der Führungsleisten mit Hartstoff zu verringern, da der Hartstoff zunächst an den Kanten und danach auch in dem an die Kanten angrenzenden Bereich schnell abgerieben wird.

Der Erfindung liegt daher die Aufgabe zugrunde, die Führungsleisten so auszubilden und anzuordnen, daß ein Druck auf die Kanten der Führungsleisten vermieden und so die Standzeit der Führungsleisten wesentlich verlängert wird.

Diese Aufgabe wird gemäß der Erfindung mit den im Kennzeichen des Anspruchs 1 angegebenen Mitteln gelöst. Aufgrund deiser Ausgestaltung und Anordnung weisen die Führungsleisten einen verringerten Verschleiß auf, überdies können sie mit Hartstoff beschichtet werden, der nicht der Gefahr des Ausbrechens und eines vorzeitigen Abriebs augesetzt ist, so daß die Standzeit der Führungsleisten noch weiter erhöht wird. Eine vorteilhafte Weiterbildung der Gestalt der Führungsleisten und ihrer Anordnung am Messerkopf ergibt sich aus Anspruch 2.

Die Erfindung wird anhand des in der Zeichnung in schematischer Weise dargestellten Ausführungsbeispiels näher erläutert. In der Zeichnung zeigen

Fig. 1    die Lage der Führungsleisten in der Bohrung nach dem Stand der Technik,

Fig. 2    die Anordnung der Führungsleisten bei der erfindungsgemäßen Reibahle,

Fig. 3    eine Seitenansicht des Messerkopfes der erfindungsgemäßen Reibahle.

Da die Schneide einer in den Messerkopf 1 eingesetzten, mittels einer Klemmpratze 6 gehaltenen Messerplatte 2 auf einem Flugkreis mit etwas größerem Radius als dem Radius des Flugkreises der Führungsleisten 3 und 4 liegt, stellt sich beim Reiben eine Lage des Messerkopfes 1 innerhalb der Bohrungswandung 5 ein, wie sie in etwas übertriebenem Maß in Fig. 1 dargestellt ist. Bei dieser Einstellung des Messerkopfes liegt die Führungsleiste 3 an der in Drehrichtung rückwärtigen Längskante A' an der Bohrungswandung an, während sich zwischen der in Drehrichtung vorderen Längskante A" und der Bohrungswandung 5 ein Spalt ausbildet, der sich nach der Längsmitte der Führungsleiste zu keilförmig verjüngt. Die Führungsleiste 4 liegt mit ihrer vorderen Längskante B" an der Bohrungswandung 5 an, so daß im Bereich dieser Längskante der Schmierfilm infolge des erhöhten Flächendrukkes abgeschert wird und die Führungsleiste einem starken Verschleiß ausgesetzt ist.

Bei der erfindungsgemäßen Anordnung der Führungsleisten werden solche an den Kanten der Führungsleisten auftretende hohen Flächendrücke dadurch vermieden, daß diese im wesentlichen nur in ihrem Scheitelbereich an der Bohrungswandung anliegen. Da auf diese Weise bei beiden Führungsleisten 3 und 4 infolge des im Bereich der vorderen Längskante (A", B") gebildeten, sich verjüngenden Spaltes sich ein Schmierfilm ausbilden kann, ist die Gefahr eines Abriebs vermieden, so daß die Außenfläche der Führungsleisten mit Hartstoff beschichtet werden kann, wodurch die Standzeit der Führungsleisten erheblich verlängert wird. Die erfindungsgemäße Anordnung der Führungsleisten hat noch den weiteren Vorteil, daß auch an den rückwärtigen Längskanten (A',B') kein Verschleiß auftritt, so daß, wenn die Führungsleisten nicht eingelötet werden, die Möglichkeit besteht, die sowohl an ihrem vorderen als auch an ihrem hinteren Ende einen Anschnitt aufweisenden Führungsleisten in einer um 180° geschwenkten Lage weiter zu verwenden. Hierbei werden die Führungsleisten mittels einer Schraube 8 am Messerkopf 1 befestigt, die vorteilhafterweise in einem Bereich der Führungsleiste angeordnet ist, der eine in Umfangsrichtung sich erstreckende Nut 7 aufweist. Bei einer solchen Ausbildung der Führungsleisten wird gleichzeitig der Schmier- und Kühleffekt erhöht.

## Patentansprüche

1.   Einmesser-Reibahle mit zwei an der Bohrungswandung mit Teilen ihrer Außenfläche anliegenden, einen zur Werkzeugsachse konzentrischen Flugkreis aufweisenden Führungsleisten, die einen kleineren Krümmungsradius aufweisen als die Bohrungswandung, **dadurch gekennzeichnet,**

- daß der Radius der Führungsleisten (3,4) so gewählt ist, daß diese in ihrem mittlerem Umfangsbereich gegen die Bohrungswandung (5) anliegen und daß zwischen der Bohrungswandung (5) und den Führungsleisten (3,4) ein sich derart verjüngender Spalt ausgebildet wird, daß bei der Bearbeitung der Bohrungswand ein zusammenhängender Schmierfilm aufrechterhalten bleibt,
- daß die Führungsleisten (3,4) symmetrisch zu ihrer Quermittelebene ausgebildet sind und an beiden Enden einen Anschnitt aufweisen,
- daß die Führungsleisten (3,4) lösbar am Messerkopf (1) angeordnet sind und
- daß die Führungsleisten (3,4) an ihrer Außenfläche mit Hartstoff beschichtet sind.

2. Einmesser-Reibahle nach Anspruch 1, **dadurch gekennzeichnet,** daß die Führungsleisten (3,4) an ihrer Außenfläche mindestens eine sich in Umfangsrichtung erstreckende nutenförmige Aussparung (7) aufweisen und mittels einer in der Aussparung (7) angeordneten Schraube (5) am Messerkopf (1) befestigt sind.

## Claims

1. A single-blade reamer with two guide strips having a flight circle concentric to the axis of the tool and parts of their outer surface contacting the bore wall, which guide strips have a smaller radius of curvature than the bore wall, characterised in that

- the radius of the guide strips (3, 4) is selected in such a way that the latter contact the bore wall (5) in their central peripheral region and in that between the bore wall (5) and the guide strips (3, 4) a tapering gap is formed in such a way that a cohesive lubricating film is maintained during the processing of the bore wall,
- the guide strips (3, 4) are designed so as to be symmetrical to their transverse central plane and have a chamfer at both ends,
- the guide strips (3, 4) are arranged on the cutter head (1) so as to be detachable, and

- the guide strips (3, 4) are coated with a mechanically resistant material on their outer surface.

2. A single-blade reamer according to claim 1, characterised in that the guide strips (3, 4) have on their outer surface at least one groove-shaped recess (7) extending in the peripheral direction and are secured on the cutter head (1) by means of a screw (5) arranged in the recess (7).

## Revendications

1. Alésoir monolame avec deux barres de guidage en contact avec la paroi de l'alésage par des parties de leurs surfaces extérieures, et présentant une trajectoire circulaire concentrique à l'axe de l'outil, barres qui présentent un plus petit rayon de courbure que la paroi de l'alésage, alésoir caractérisé en ce que

- le rayon des barres de guidage (3,4) est choisi de telle façon que les barres touchent la paroi de l'alésage (5) dans la zone médiane de leur périphérie et qu'entre la paroi de l'alésage (5) et les barres de guidage (3, 4) il se forme une fente qui va en ce rétrécissant de telle sorte que lors de l'usinage de la paroi de l'alésage on conserve un film lubrifiant adhésif.
- les barres de guidage (3, 4) sont symétriques par rapport à leur plan médian transversal et présentent une entamure à leurs deux extrémités.
- les barres de guidage (3, 4) sont disposées sur la tête porte-lames de façon démontable et
- les barres de guidage (3, 4) sont recouvertes d'une matière dure sur leurs faces externes.

2. Alésoir monolame, selon la revendication 1, caractérisé en ce que les barres de guidage (3, 4) présentent sur leurs surfaces extérieures au moins un évidement (7) en forme de rainure s'étendant dans le sens du pourtour et sont fixées sur la tête portelames (1) au moyen d'une vis (5) disposée dans l'évidement (7).

*Fig. 1*

*Fig.2*

*Fig.3*

4